# EUROPEAN PATENT APPLICATION

(11) **EP 4 609 951 A2**
(43) Date of publication of application: **03.09.2025**
(21) Application number: 25150500.4
(22) Date of filing: 07.01.2025
(51) Int. Cl.: B01L 3/00, G01F 11/28, G01N 35/10, B01J 19/00

(54) **TECHNIQUE FOR SMALL VOLUME METERING**

(30) Priority: 09.01.2024 US 202463619256 P
(71) Applicant: National Research Council of Canada, Ottawa, Ontario K1A 0R6 (CA)
(72) Inventor: Shiu, Pun Pang, Ottawa, K1J 7T6 (CA); Li, Kebin, Brossard, J4Z 1R1 (CA); Veres, Teodor, Montreal, H3V 1H2 (CA); Morton, Keith, St-Bruno, J3V 3J9 (CA)
(74) Representative: Glück Kritzenberger Patentanwälte PartGmbB

(57) **Abstract**

A method for metering a small volume of liquid is provided that leverages a dynamic redistribution provided by surface tension. A sample is made to over fill a metering cup, and occupy part of a surrounding overflow chamber, while providing a free surface above the metering cup and a rim surrounding the cup. Then retraction of the overflow volume to a critical point causes redistribution of the sample and a cleaving of the sample into a metered volume within the cup, and an overflow volume that is extracted.

## Description

### Field of the Invention

The present invention relates in general to a technique (method, apparatus, kit, patterned surface, chip, and device) for metering small volumes, and in particular to small volume metering by retaining liquid overflowing a cup, and withdrawing overflow to enable a spontaneous surface-tension based redistribution using a patterned surface that defines the metering cup and part of a fluidic system.

### Background of the Invention

It is known to accurately meter tiny volumes of liquids in a lab with good precision using known equipment and processes, even if these may be expensive and/or time consuming. In industry, suitable practices, techniques and equipment are developed for various needs in dependence on scale and frequency of the measurement, available supplies, equipment, time, human resources, and standards. There is a general need for lower-cost, widely deployable, robust and reliable higher accuracy metering systems that have lower footprint instrumentation and infrastructure, especially such systems that can meter small volumes, require less time and effort of skilled workers, or less training and skill on the part of the worker.

Herein 'small volume' denotes a volume of less than ½ mL, e.g. 0.02 to 200 µL.

In particular there is a need for small volume metering of liquids of well characterized rheology with high accuracy, and there is a need for small volume metering of a wider range of liquids, such as samples of incompletely characterized rheology, sacrificing less accuracy. Metering of aqueous or oil-based suspensions and solutions (or liquids of like rheology) is needed in home, hospital or clinic, for biomedical and epidemiological testing, as well as in food-, water-, or air-borne, or other industrial sample testing. Microfluidic systems can advantageously sample and test tiny volumes, often using centrifuges or complex electronic circuitry of digital microfluidics, for example, but they often need sample introduction systems and metering devices to operate effectively. Equipment like this very quickly lends itself to operation by skilled technicians, and the challenge remains to simplify testing, aspirationally, to a point where anyone of typical dexterity can quickly, accurately, and easily meter small volumes. Equipment like this also needs great care to clean parts that are reused, and limits what materials can be handled and in what sequence, to avoid cross-contamination issues.

The manipulation of small volumes of biofluids and reagents is a principal challenge defining the field of microfluidics. Various microfluidic assays and protocols can be provided with faster answers (due to shorter reaction times of small volumes), and/or at lower costs due to small volumes (if reagents are costly). Microfluidic assays can also reduce sample handling and contamination issues during multistep protocols, and can reduce manual workload. The present invention relates to accurate and consistent metering of such volumes of liquid with less equipment, training and time whether or not by, or for, a microfluidic system.

US 10,821,445 to Selden et al. teaches a biochip with a process controller, pneumatic, thermal and optical subsystems, for insertion into an instrument. Selden *et al.* peripherally addresses metering. At Cols. 57,63 metering is said to happen by delivering liquid into a metering chamber, such that "[e]xcess formamide is pneumatically driven from the formamide chamber into a waste chamber." Thus one way to meter is to inject a liquid into a microfluidic circuit to fill a given volume between two junctions, change valve states at the junctions to remove liquid after or before one or both junctions to fluidically separate a plug of the fluid, and then change valve states again to move the now metered liquid plug from the given volume. While metering, at some level of accuracy can be accomplished if no air bubbles are produced in the metering chamber, and control over positions of liquid with respect to valves is adequate, it is challenging to accurately meter liquids without visually inspecting the metering chamber, and costs and time of doing so are substantial. Both accuracy of metering, and confidence in accuracy of metering are generally desired. Without certainty that filling is complete, with well aligned liquid, there can be no assurance of accurate metering. The structure required to perform this metering is also challenging, in that a number of independent pressure-controlled lines need to be provided at each junction, leading to complex network topologies, especially if sample preparation is required by a protocol for the chip.

Applicant's WO 2013/003935 teaches a centrifugal microfluidic metering technology that is repeatable and reliable, and can be performed without supervision. No visual accuracy of alignment is required. A metered delivery into a process chamber, is provided as long as: sufficient volume of liquid is preloaded into the chip; the chip is correctly mounted to a centrifuge; and sufficient time is provided to allow the centrifugation. While centrifugation allows for metering with limited efforts, the present invention is directed to metering where no centrifuge is available.

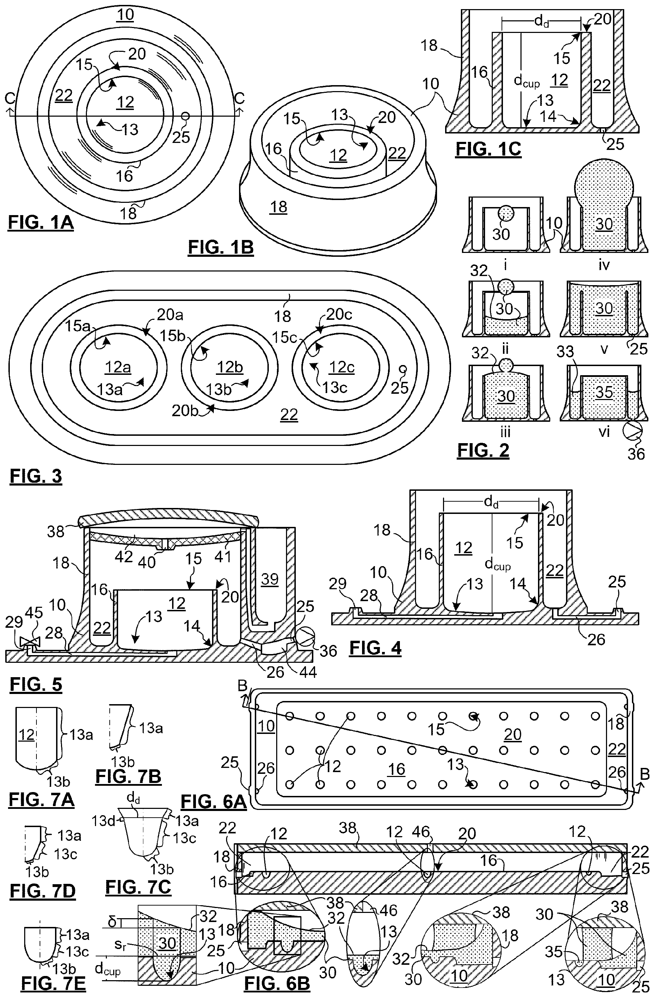

US 8,795,607 to Kurowski et al. purports to teach metering reagent in microfluidic systems with blisters that can be pierced to release the blister's liquid content. Kurowski appears to be somewhat concerned with accurate metering, in view of the issue taken with bubbles and piercing objects within the chamber (C2,L23-33). Applicant notes that while providing a bubble-free blister can help with metering, it does not ensure accurate metering, unless complete, or reliably incomplete delivery of the liquid from the container is provided. According to Kurowski (C7,L4-10) "the metering of the solutions or reagents is carried out by compressing the container", "preferably ... by an operating person pressing their fingertip onto the outer surface", although alternatively "a die" may be used to compress the container. Applicant submits that variability of pressure, and variability in how the blister and films deform (FIGs. 2e,5c,6c, and particularly 7b) offer very poor prospects for metering uniform volumes, as the volume delivered will be some ill-defined fraction of the volume of the container. Even with a flat die of calibrated size and controlled motion of "defined amount" (C7,L1 1-12), metering accuracy, is unproven.

Incidentally, Selden *et al.* teaches a "spacer plate 105" shown in top plan view as FIG. 2, and as a cross-section in FIG. 3 used for reagent storage and release. The spacer plate has no identified association with a metering function, but rather appears to be part of a valve, providing a structure to permit membrane rupture.

US 2021/060566 to Corey et al. teaches a multiplex liquid processing cartridge with a microfluidic manipulation side, and an electrowetting grid for micro-droplet manipulation. Corey *et al.* is not prior art: it does not direct itself to the metering of liquids, and is neither concerned with, nor solves, the problem of metering. The microfluidic side of the cartridge includes, as shown in FIGs. 6,7, a sample well 78 defined by a peripheral wall 79, and a floor 81, that forms a cupped surface. The cupped surface happens to have an exit port 82, and an inlet snorkel 80 extending up along the peripheral wall 79, terminating at a position below the top of the peripheral wall 79. The inlet snorkel 80 has a peripheral edge and a rim substantially surrounding the peripheral edge, but the only rim substantially surrounding well 78 is well above any overflow structure. As there is no rim, this cupped surface incapable of metering according to the present invention.

There therefore remains a need for low volume metering that can be done with less training, and less time to produce higher accuracy metered liquid volumes, with less attendant equipment, such as centrifuges. Advantageously these can be embedded in low-pressure microfluidic chips.

### Summary of the Invention

Herein a technique for accurately and consistently metering small volumes of liquids is provided with minimal attendant equipment, and less time and effort, by less trained workers. The technique leverages a surface-tension phenomenon that separates or cuts a liquid droplet around a well-defined rim in the presence of a free surface of the liquid, when there is excess volume, and excess is drawn away from the rim in a controlled manner. A relief patterned substrate (which may be a low-cost, injection-moldable, substrate of thermoplastic, thermoset, or thermoplastic elastomer, or may be glass, metal, ceramic or a composite or mixture thereof) is provided having features defining the rim, a cup surrounded by the rim of determinate volume (volumetric capacity), a structure for supporting pooling liquid around the rim, and at least part of an overflow extraction path. A covering and/or filling structure may also be provided to cooperate with the substrate.

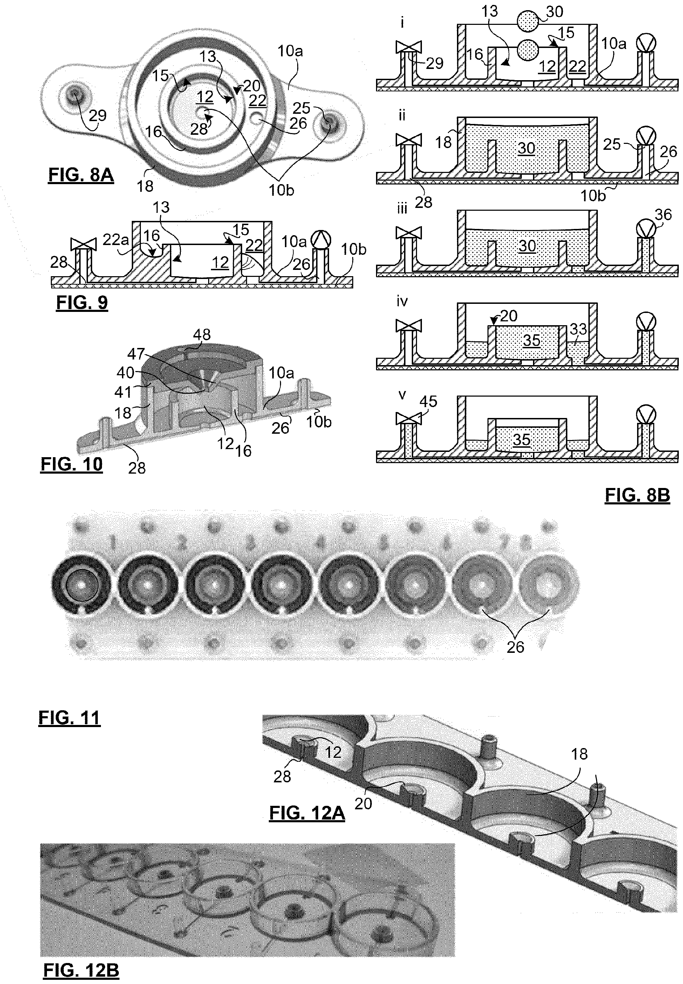

Shearing of excess liquid by surface tension is a natural phenomenon when a reservoir or cup is sufficiently over-filled with a free surface to ambience, and some mechanical energy is imparted to the liquid. When a cup is slowly filled, for example by dripping droplets of mean size less than 1/10^{th} the volume of the cup, under gravity, the cup fills with each droplet (the first four steps of FIG. 2 depict this). After any transient effects, the agglomerated liquid will make a characteristic contact angle between the cup surface, the liquid, and ambient gas (nominally air (sterilized or not) although CO₂, O₂, N₂, and mixtures of these or other gasses can be used in certain applications, and pressure may be other than atmospheric). If the cup surface is curved, at different fill levels, a meniscal arching of the free surface may be different, but nature equilibrates a surface tension across the droplet rapidly (nearly instantly: herein "spontaneously"). Once the fill level reaches the rim (prior to step iii), the meniscal arching is minimal, in that further added droplets continuously increase arching of a "cap" of the liquid until perturbed (which can be from contact with a droplet). A higher the apex: the less stable the cap. Once a cap's apex exceeds a height, as in step iv, the cap is unstable and a next drop is likely to apply a stress that results in the spontaneous surface-tension rearrangement of the liquid. For present purposes, what is most useful about this physical phenomenon, is the regularity with which the spontaneous process cuts the liquid. Regardless of what level of arching was obtained before the perturbation was supplied, what specific shearing force is applied, or what specific volume was present, the shape of the rim itself seems to substantially determine the cleavage of the whole liquid plug, and so a reliable metering within the cup can be achieved. A free surface of the liquid extends substantially above the rim (cap) before perturbation, but is at the level of the rim after the spontaneous rearrangement (for example as shown at the step iv of FIG. 8B). While this phenomenon is interesting in its own right, the present invention is directed to leveraging this phenomenon to meter small volumes of liquids, that doesn't require the manual dexterity, training, attention, and control required to perform this experiment.

The technique includes a patterned surface, a kit, be it assembled to form a chip, or device, and a method. The method may be easier to conceptualize. A metering cup is overfilled with the liquid to be metered (as in step v of FIG. 2), to produce a flooded state with liquid covering a rim around the metering cup, and beyond, and covering an exit (overflow) port or drain. The flooded state ensures complete wetting of the metering cup, for example: by dripping droplets of substantially smaller volume than the metering cup into the cup directly, and allowing the excess to pool around the cup; or by tide-pool flooding of the cup and an area around the cup, with the cup(s) shaped to encourage complete wetting of the cupped surface during flooding. The cup may or may not be part of a covered chip (covering is preferred in many applications to reduce evaporation and contamination), but if covered, the flooded volume is not a plenum, and accordingly the system is three-phase: liquid, ambient gas, and solid substrate. As the flooding does not make a plenum of liquid within a chamber defined between the cover and substrate, there is a free surface when flooded. Once in the flooded state, addition of liquid to the cup or pooling area is stopped. The pooled liquid is then drawn away to gently pull the liquid until a level of the liquid in the pool around the cup drops below the rim. Once this happens, surface tension effects spontaneously redistribute the liquid in a substantially irreversible manner, that cuts the cap away from an interior peripheral curve that separates the cup from the rim. While the whole rim does not need to encounter the free-surface at a same time for spontaneous cutting, a substantial difference in the free-surface relative to the rim as a function of azimuthal position (viewed from the centre of the cupped surface) may frustrate cutting or make the process unreliable, and is avoided, e.g. by placing each rim close enough to a centre of the pooling region, where a free surface is flattest.

The patterned substrate alone, in a kit, or assembled to form a chip, or a microfluidic device, is provided to perform this method. The solid patterned substrate in accordance with this invention has at least one metering chamber or cup located within a pooling area. Each metering chamber has a cupped surface having a respective depth d_{cup}, and is surrounded by a respective rim. Rims do not need to be planar, but, as noted above in relation to the method, any contour should somewhat match that of the free surface to avoid a plug of liquid being pinned in a corner or along an edge of the substrate, which could frustrate reliable cutting by spontaneous redistribution. Each cupped surface is bounded by a closed interior peripheral curve of length l_{d}, this curve bounds a surface for the metered volume which ensures cleavage of the droplet at this curve.

The peripheral curve is preferably convex, but at least has a largest included circle (LIC: a circle of greatest diameter that lies within the peripheral curve) with at least ½ an area of a smallest circle that surrounds the peripheral curve (i.e. SSC). The centre of the SSC must lie within the LIC. The peripheral curve has no sharp corners or vertices, so its polar equation r(Φ), centred on the centre of the LIC, is continuous and smooth. Preferably the curve has no more than 6 extrema (minim and maxima), and more preferably at most 4 extrema. The peripheral curve may be circular, elliptical, or a smooth collection of 1-6 piecewise continuous curves, each curve approximating part of a conic section. The rate of change of curvature of the peripheral curve, is preferably bounded such that minimum and maximum curvatures vary by less than 50%. Preferably no point on the peripheral curve has a radius of curvature smaller than ½ a radius of the LlC.

If there are two or more cups, rims of adjacent cups may partially overlap, but their peripheral curves will not intersect. Preferably the peripheral curves are separated by at least ½ d_{cup} (or, if different, their average). Each d_{cup} is from 1/20 to 1/2 of its l_{d}, as: a depth shallower than 0.05 l_{d} (especially for smallest volume metering: i.e. < a few µL) leaves a cut surface area very large relative to the total surface area of the metered liquid, and may not be reliable; and its depth of greater than ½ l_{d} may be difficult to fill without risk of trapping an air bubble at the bottom (again especially for the smallest volume metering which would typically require d_{cup} < 1/3 of l_{d}). Preferably an aspect ratio (d_{cup} to minor axis of planform shape) is between 1:5 to 2:1. Designing devices for 10-200 µL metering is made easier, with more flexibility viz. d_{cup} and profile shape.

For each metering chamber, the rim locally defines (up to limits of accuracy of forming) a respective smooth surface Sᵣ with respect to which a volumetric capacity of the metering chamber (C) can be calculated to be from 0.05 to 500 µL. As Sᵣ is reasonably flat, at no point does Sᵣ have a curvature greater than a point of highest curvature on l_{d}, and Sᵣ has no curvature at any point within the peripheral curve (covering the cup) greater than a maximum curvature defined by the rim. Sᵣ is preferably a minimal surface, and is typically a plane. The capacity may be 5-250 µL, preferably 10-200 µL, for small volume metering, or 0.2-8 µL for the smallest volume metering. Sᵣ can be compared with a free surface of a liquid content of a flooded device to determine minimum and maximum separations prior to spontaneous redistribution.

The pooling area of the substrate is generally a less sensitive structure, having higher tolerances on surface finish and dimensions. There is no requirement for surface affinity (wetting) of any part, nor any continuity of walls therein, nor enclosure thereof, however enclosure may still be preferable, especially if the overflow is to be recycled. The substrate defines a retaining structure for supporting liquid overflow or pooling volume with a free surface strictly above (each respective) Sᵣ (at least within the rim and overlying the cup). The overflow volume is greater than 1/5^{th} C (or the collective capacities of all cups if there are multiple cups), and preferably less than 50 C, more preferably less than 10 C. A ratio of C to the overflow volume can vary quite widely, for example depending on how precious the liquid being metered is: If precious, the overflow volume (i.e. the volume of the flooded pooling area = the volume in the chip - C) could be 0.25 - 0.2 C, or less. Otherwise the overflow volume could be 2 - 50 C, for example.

A gated drain (or port) is provided in the substrate to enable the withdrawal of the pooling liquid. The drain is preferably located substantially at or below Sᵣ. For small metering the drain is preferably substantially below Sᵣ as this is easily provided, and is preferably at a greater relief depth than the rim as this is preferred to avoid any slight angles of the chip in use or accelerations of the chip in use affecting metering: positioning the drain opening below the rim ensures that gravity and Stokes flow direction do not ever contend with each other. This is not strictly necessary as a surface tension of the liquid may be relied upon to ensure sufficient evacuation, especially if the substrate has no risk of movement during the metering. It is preferred for simplicity, for robustness, and to reduce any risks of gravitational or accelerometric forces resulting in entraining air in the drain, as this may complicate uniform withdrawal of the pooling liquid. The relief depth of the gated drain may be substantially lower than the rim (e.g. lower than the rim at any angle of the chip with respect to gravity up to 40°), and may be at a full depth of the cup, or lower. This ensures that the pooling liquid can be retracted to a substantial distance below Sᵣ, which avoids any risks of splash or other mixing of the pooling liquid after the metered volume is cleaved from the pooling liquid. This can also be achieved with wide rims and gently curved pooling areas. A device with the chip and a pump actuable to imbibe liquid into the metering chamber, and/or to withdraw the overflow is also provided.

For small volume metering, the substrate may further have a single opening in the cupped surface for withdrawing metered liquid. For smallest volume metering, such channels may be impractical in that, to avoid excess (and unreliable) loss of volume in transit, a path from cup to use may necessarily be too short to be of practical value. That said, if glass or metal substrates are used, it may be possible to produce channels that adequately control smallest volume metering for some applications. If the cupped surface has an opening for withdrawing the metered volume, the opening is provided distally of Sᵣ, and has a smallest hydraulic diameter practical, and in all cases less than 1/5^{th} that of the peripheral curve, so that the liquid will produce a reliable and repeatable air plug in the filling of the cup. A device with this opening further comprises a valve that blocks the opening during the filling, and permits retraction after the pooling liquid is removed.

Each point on Sᵣ, on or within the closed interior peripheral curve, has a local normal that is a given distance from the free surface defined in a flooded state. The local normal of all such points has an average d_{avg}. As long as no two points have distances that differ by more than ½ (d_{cup} + d_{avg}), and more preferably ¼ (d_{cup} + d_{avg}), for a wide variety of applications and liquids, spontaneous redistribution based metering of liquid in the cup can be ensured by applying suction to the drain. In practice, typically, the slope of the free surface in a microfluidic chamber increases dramatically around the edges, and is relatively flat across a centre, and accordingly to ensure that the separation between free surface and Sᵣ does not diverge across the peripheral curve, the edge of the peripheral curve can be kept towards a centre of the chamber.

Accordingly a solid substrate defining at least one metering device is provided, the substrate comprising: a metering chamber comprising: a cupped surface 1- bounded by a closed interior peripheral curve of length l_{d}, and 2- having a depth d_{cup}, that is between 0.05 and 2 times l_{d}; a rim surrounding the metering chamber's peripheral curve locally defining a smooth surface Sᵣ that includes the peripheral curve and covers the metering chamber to enclose a volume V of the metering chamber that is between 0.05 and 500 µL; a retaining structure for supporting a liquid overflow volume with a free surface above each respective Sᵣ, the overflow volume being greater than 1/5^{th} V; and an actuable drain for withdrawing the overflow volume from the retaining structure, the drain provided by an opening to the retaining structure located below the rim, where: the chamber has: no opening in the cupped surface; or only one opening through the cupped surface to a second chamber, the opening provided distally of Sᵣ, and having a hydraulic radius less than 1/5th that of the peripheral curve; and at least one of the following: i) the retaining structure supports a volume of overflow for which no point on Sᵣ has a distance to the free surface denoted dₛ that differs from d_{avg} by more than ½ (d_{avg} + d_{cup}), where d_{avg} is an average distance from all points on Sᵣ to the free surface; ii) the retaining structure is arranged so that overfilling the cup such that the cup is full and liquid pools around the rim to cover the drain, permits the drain to withdraw the pooling liquid below a level of the rim producing a spontaneous redistribution of the liquid under surface tension to meter the liquid in the cup.

In some embodiments Sᵣ is a minimal surface having no curvature greater than 80% of a maximum curvature of the cupped surface measured away from the peripheral curve, and away from the opening if extant, and in some embodiments a maximum curvature of the cupped surface away from the peripheral curve is 4 / d_{cup}. In some embodiments, Sᵣ, within the rim and over the cupped surface, is bounded between two planes separated by a distance of less than ¼ d_{cup}. In some embodiments a maximum curvature of Sᵣ between the two planes is less than half a maximum curvature of the cupped surface away from the peripheral curve and any opening provided distally of Sᵣ.

In some embodiments, the cupped surface: has a continuously reduced cross-sectional surface area as a function of distance from Sᵣ: away from the peripheral curve and any opening, is a smooth, simply concave, surface, with a rate of change of curvature of less than 50% along any arc from a bottom to the peripheral curve; or is a revolute surface having an axis of revolution locally perpendicular to Sᵣ.

In some embodiments, the retaining structure includes one or more walls providing a retention level higher than Sᵣ by at least 1/3 d_{cup}, and thus includes an overhead region above the cup.

If the cupped surface includes the only one opening, it is coupled to a port, or a microfluidic chamber, for receiving metered sample; and preferably V > 6 µL.

In some embodiments, the metering chamber is one of a plurality of metering chambers of the substrate. In some of these embodiments, each metering chamber has a same common volumetric capacity (up to manufacturing tolerances). In other of these embodiments, two or more of the plurality of metering chambers havw different volumetric capacities. Some of these embodiments feature designated or shared overflow volume for the respective metering chambers, and having a designated or shared actuable drain.

Some embodiments further comprise a fluid supply for delivering a sample liquid into the metering chamber. In some embodiments the fluid supply is provided for filling the metering chamber before filling the overflow volume, and in others it is provided by filling part of the overflow volume before filling the metering chamber.

Some embodiments further comprise at least one of: a cover adapted to be sealingly bonded to part of the retaining structure to enclose the overflow volume and cupped surface; a cover adapted to be sealing bonded to the substrate to enclose a microfluidic channel for: supplying sample to the metering chamber; retracting overflow from the overflow volume; or delivering a metered volume from the metering chamber; an operable valve for a port of the substrate; a pump for applying a pressure of 0.7 KPa to 7 KPa to a port of the substrate, or a cover; and a sensor and controller for controlling a pump or valve in response to detected spontaneous redistribution of liquid around the rim during withdrawal of overflow from the overflow volume.

In some embodiments the kit is assembled to produce a metering device.

Also accordingly, a method is provided for metering a liquid volume of a sample. The method comprises: supplying a volume of the sample in excess of a desired volume, to a metering cup; allowing the cup to be overfilled, and to flow into an overflow collection chamber that surrounds an opening of the cup until the level of sample in the overflow collection chamber covers the cup, the cup having a smooth rim surrounding a peripheral curve at an edge of the cup, such that the sample above the rim and cup has a free surface; and removing sample from the overflow collection chamber until the sample spontaneously redistributes to leave a metered volume in the metering cup.

In some embodiments of the method, removing the sample comprises applying a lower than ambient pressure on a retraction channel coupled to the overflow collection chamber below the rim.

Some embodiments of the method further comprising applying a pressure difference between the metering cup and a withdrawal channel coupled to the cup, to displace the metered volume in the cup to a chamber.

In some embodiments of the method, supplying the volume comprises applying a pressure difference between the overflow volume and a supply to move the liquid volume into position flooding the cup and partially filling the overflow collection chamber, where the supply fills the cup first and the over flow collection chamber second, or the cup partially fills the overflow collection chamber prior to filling the cup.

A copy of the claims as filed and as granted are incorporated herein by reference in their entirety. Further features of the invention will be described or will become apparent in the course of the following detailed description.

### Brief Description of the Drawings

In order that the invention may be more clearly understood, embodiments thereof will now be described in detail by way of example, with reference to the accompanying drawings, in which:
FIGs. 1(A-C) schematically illustrate a substrate relief-patterned for small volume metering in accordance with a first embodiment of the present invention, respectively with a top plan, an isometric, and a cross-sectional elevation, view;
FIG. 2 is a strip showing 6 steps in one embodiment of a method of the present invention, using the substrate of FIGs. 1 in cross-sectional elevation view;
FIG. 3 schematically illustrates a first variant of FIG. 1, that has relief patterned defining three small volume metering devices;
FIG. 4 schematically illustrates a substrate relief patterned to provide a metering device having a channel for withdrawing metered liquid, in accordance with a second variant of FIG. 1;
FIG. 5 schematically illustrates a relief patterned substrate providing a 3-piece metering device including the substrate of FIG. 4, a liquid guiding insert for centred injection, and a cover for sealing above the insert such that metering can be driven by a single pump, in accordance with a third variant of FIG. 1;
FIG. 6A is a top plan view a substrate relief patterned to provide a small volume metering device in accordance with a second embodiment of the present invention, the second embodiment adapted for smallest volume metering;
FIG. 6B is a cross-sectional view showing the substrate of FIG. 6A with a cover, viewed along section line BB, featuring 4 enlargements of 3 areas, the 4 enlargements showing filling of liquids in according with a second method of the present invention, one of the 4 enlargements has an enlargement to show a feature limiting the proximity of the metering cup to a side-wall of the cavity;
FIGs. 7A-E are cross-sectional images showing sidewall profiles of metering cups adapted for tide-pool loading;
FIG. 8A is a perspective view (near top plan) of a fourth variant of FIG. 1, which is quite similar to the second variant; and FIG. 8B is a strip showing a method of small volume metering using the fourth variant, in cross-sectional view;
FIG. 9 is a cross-sectional view of a fifth variant of FIG. 1, with reduced pooling volume provided by a variable depth floor of an outer bucket;
FIG. 10 is a cross-sectional view of a CAD drawing of a two-piece microfluidic device in accordance with a sixth variant of FIG. 1;
FIG. 11 is a photograph of an 8-chamber design for testing volume in a variety of 3D printed devices for metering 6.28 - 200 µL volumes (8 mm dia. shown);
FIGs. 12A,B are a perspective view of a cross-section of a CAD design, and photograph of a 3D printed device in accordance with the CAD design example featuring a variant of the second example of the invention used to meter 0.6-2.4 µL;
FIGs. 13A-C are photographs showing three devices with respective arrays of metering chambers of differing dimensions containing metered dyed water, each chamber having a cupped surface with a hemispherical shape;
FIG. 14A,B show the device of FIG. 13B in metered, and flooded states, respectively, and
FIGs. 14C,D show enlargements around time steps where spontaneous redistribution occurs.

### Description of Preferred Embodiments

A technique for metering small volumes of liquid is provided. The technique involves overfilling a metering chamber, so that excess liquid pools around a rim of the metering chamber, and then stably removing the pooled liquid to meter liquid remaining within the metering chamber. Various filling and withdrawing techniques can be used in to leverage the same spontaneous surface-tension-based redistribution phenomenon.

FIGs. 1A,B,C are respectively a schematic top plan view, a schematic perspective view, and a cross-sectional (C of FIG. 1A) side elevation view of a patterned substrate for small volume metering of a first embodiment. The substrate 10 is patterned to define a metering chamber 12 defined by a cup having a cupped surface 13. As seen in FIG. 1C, the cupped surface 13 is generally cylindrical: it comprises an interior surface of a cylindrical wall 16, a circular floor of the substrate 10, and an adjoining small radius bend 14. It will be appreciated that a wide variety of shapes of cupped surface 13 can be provided, especially if filled by dripping. E.g., if the surface 13 is predictably wetted by the liquid, it will have a fixed volumetric capacity (C). Applicant prefers complete wetting of the surface 13 to this end. For most applications, C is well characterized prior to use, though for some purposes repeatably metering a same volume is more critical than a fixed volume, or relative metering of two volumes by may be more critical than either volume.

The cup has a depth (d_{cup}), measured from a rim 20 (top of the wall 16) at an opening of the cup, to the floor of the cup. As shown, the rim 20 is planar, and the wall extends continuously on both the internal side (the cupped surface 13) and on the external side, although neither is necessary. If the rim 20 is not planar, it may locally have simple or complex curvature, but it preferably locally defines a smooth surface Sᵣ. While it will be evident to those skilled in the art that each forming technique (3D printing, injection molding, thermoforming, etc.) has its own limitations on fidelity of replication, and thus surface quality of the rim will always have some roughness, a design or primary form for the rim should be generally inferable from the structure, and the rim should have a primary shape that locally defines Sᵣ, that preferably approximates a minimal surface. Sᵣ, locally defined by the rim 20, extends e.g. as a minimal surface or more preferably a planar or nearest to planar (lowest curvature) surface covering the metering chamber 12. A 0.05 to 500 µL volume of the metering chamber 12 can be computed with reference to Sᵣ. This volume may be the same or slightly different than the capacity C, depending on meniscal effect. The smooth surface Sᵣ at no point has a curvature higher than 80% of a maximum curvature of the cupped surface (measured away from the rim). As shown, the highest curvature of the cupped surface is the low radius bend, which is much higher than the highest curvature point of the planar Sᵣ. The cup or metering chamber 12, as shown, has no port or egress and is therefore a blind cavity.

A closed interior peripheral curve 15 is an external corner or edge effectively delimiting the rim 20 from the cupped surface 13 (below any sufficiently shallow champfer or flare). The curve 15 as shown is a circle, that lies in a plane of a rim 20, provided atop wall 16 of the cup. As the rim 20 need not be planar, neither does curve 15. Furthermore the shape of the curve 15 need not be of a single fixed curvature, but the limits on Sᵣ apply to the curve 15, which is notionally limited to Sᵣ. The closed interior peripheral curve 15 could be an ellipse, or other curve, including the rounding of a piece-wise linear curve, but is smooth so as to avoid vertices and edges within the cupped surface 13, as there can be challenges with wetting sharp edges. This is convenient as surface patterning sharp internal angles and edges are much more difficult. As the curve 15 is a circle of diameter d_{d}, its length is l_{d} = π × d_{d}. As shown l_{d} ≈ 2.5 d_{cup}, but l_{d} could be ½ d_{cup} to 20 d_{cup} and equally function. Many embodiments will have l_{d} from ½ d_{cup} to 20 d_{cup}.

The substrate further comprises an outer wall 18 that, as shown, happens to be primarily cylindrical. Outer wall 18 encircles the cup, and serves as one of many possible retaining structures for holding liquid that overflows the cup, allowing controlled withdrawal of the excess. Specifically, the outer wall 18 defines an outer bucket 22 that radially surrounds the cup, and also extends above the rim plane, as best seen in FIG. 1C. While outer wall 18 completely encloses the outer bucket 22, this may not be required in all embodiments of the invention.

A port 25 for evacuating the outer bucket 22 is provided at a relief bottom thereof, and may be coupled to a valve, and preferably to a suction-driven chamber. In some embodiments, the suction-driven chamber may be a source that injected liquid into the cup, and thus the excess sample may be recycled. In others, the sample may be unusable for metering after exposure to ambience. While port 25 is shown on a floor of the outer bucket 22, in substrate 20, it could be in a sidewall of the outer wall 18, anywhere well below Sᵣ. There is preferably a coupling end, such as a luer-to-tubing connector for coupling to a pump (not shown) adjacent the port 25. A mechanism for gently withdrawing the overflow from outer bucket 22 is required to provide a metering device, although this can be provided in a kit or supplied separately of the substrate. Also, instead of a port to an off-chip reservoir, the chip may provide a path to an on-chip area, along with flow control equipment to arrest flow during a filling phase, and ensure flow at a limited rate after the filling phase, at least until the liquid subsides well below Sᵣ.

In some embodiments, a cover may be provided that meets a top edge of the outer wall 18 to enclose the cup. For some applications, a thin film or tape may suffice to enclose the cup and outer bucket 22. Due to time and effort needed to open a film, inject a liquid, and close the film, it is an operation desirably obviated. A self-healing pierceable film can improve this, and an automated filing process can be developed relying on self-closure of the piercing. Covering reduces risk of transfer or exchange with ambience, and may also provide a seal that permits fluidic control over the sample. Two methods for filling the cup and outer bucket 22 to overflowing, are explained hereinbelow.

FIG. 2 is a panel schematically illustrating 6 steps in a first process of metering using the substrate 20 of FIG. 1. The panel shows a same substrate 20 in the cross-sectional elevation view of FIG. 1C, in successive steps. The first process involves drip feeding the cup directly, although no structure is shown. The first step (i) shows a first droplet of sample 30 to be metered, falling into the cup. The illustration shows the droplet falling from a generally centrally-aligned source, although this is not necessary. In some embodiments it is preferred to drip the droplets onto an edge of the cup, or even onto the rim 20. While the sample 30 is shown injected as droplets, it will be appreciated that a stream may be equally useful, especially if roughly metered, visually controlled by a user (although this is preferably avoided), robotically injected (with the substrate provided in a registered position), or another mechanism is provided for controlling overflow around the outer bucket 22. It will be appreciated that depending on the price of the sample 30, there may be a lot of, or little, attention to over-filling the cup in terms of how much excess sample is supplied. If metering water, or a low-cost biofluid, injection by a stream with substantial waste may be satisfactory. By feeding droplets that have mean volume less than 1/3 a capacity of the metering chamber (and less than 50% variance) may statistically limit waste. As shown the first droplet is about 1/40^{th} of C.

Step ii shows a further droplet after several droplets have pooled. Previously supplied droplets have a free surface 32 between the sample 30 and ambience. The free surface has a characteristic meniscus and a particular contact angle. A wide variety of surface affinities of materials used to form the substrate 20 and liquid samples are not intended to be limited, but as shown, the cupped surface 13 is hydrophilic. As the cupped surface 13 is generally cylindrical, the meniscal form will retain substantially the same shape as the cup fills (once fill level exceeds small radius bend 14). By step iii the sample 30 has filled the cup, and the newly added droplet is merging with the sample 30, breaking the free surface 32. By step iv, a substantial cap has accreted, and precariously overlies the rim plane. It will be appreciated that this cap may be somewhat exaggerated: unless the sample has a high surface tension, it is quite likely to have collapsed before reaching this volume. It can be anticipated that a next drop, or other provocation will likely cause a collapse of the cap, and a spontaneous redistribution of the sample 30. This is what is shown in step v. Depending on a volume of the outer bucket 25, relative to an expected minimum volume of the cap, the first spontaneous redistribution may place the sample in a flooded condition, in which the outer bucket 22 and cup are filled to a level safely above Sᵣ. If not, re-overfilling the cup (through steps iii,iv) a fixed number of times, such as 2 or 3, may be required to bring the liquid into the flooded condition of step v.

One control strategy for accomplishing the process is to use a same pressure source for dispensing the sample into the cup, to withdraw the liquid, either by switching a path for the pressurized or depressurized liquid, or with controlled valves. In some embodiments a same pressurized stream can be used to draw liquid into the cup, and over fill it, and can then be used to withdraw the liquid, as long as the volume of liquid supplied is reliable to within given limits. In other embodiments a sensor is used to detect water pooling in the outer bucket (i.e. if a first collapse of the cap is guaranteed to lead to a flooded state); or a sensor can be provided to detect a fill level exceeding Sᵣ. Various sensor arrangements for the latter can be used, including: optical reflection off the rim 20, away from the peripheral curve (assuming a broader rim than is illustrated in FIG. 2) that can be very different than reflection off a minimal free surface between water; laser triangulation on a surface within the outer bucket; wicked filling of optically interfering structures located on the outer wall 18; or a conductivity, pressure, or chemo-sensor along the top edge of the outer wall, above Sᵣ.

At this juncture the dripping is stopped. Any late droplets may marginally increase the already flooded outer bucket, but do not affect metering, unless the droplet falls after the critical point in the process. Nonetheless, Applicant prefers to cease drip supply prior to withdrawing, to provide highest confidence in the metering process.

The critical point is not easily visualized, and occurs between steps v and vi. With the outer bucket draining sample 30, a balance of forces on the free surface spontaneously redistributes the liquid, peeling a last of sample that is drawn towards port 25. The sample is thus separated in a predictable and reliable manner into metered volume 35, and overflow 33. Step vi shows port 25 with a schematically illustrated pump 36, reducing the outer bucket's fill level to a level that is a safe margin below Sᵣ. A low-power pump 36 i.e. a pump 36 exerting a pressure difference of 0.7 KPa to 7 KPa is preferred.

FIG. 3 schematically illustrating a first variant of the embodiment of FIG. 1. Herein reference numerals identified by variants share the same features and their descriptions are not repeated herein. Each variant shows one or more variations and each variation of each variant is presumed to be combinable with each other variation to produce other intended embodiments of the present invention, unless contraindicated. While FIG. 3 shows 3 three metering chambers 20a,b,c, each similar to those of FIG. 1, or having any of the profiles illustrated in FIGs. 7A-E, alternatively there are more or fewer metering cups ensconced within the common outer bucket. In this case, outer bucket 18 has a planform shape of a rectangle with rounded ends, as this affords a reasonably uniform minimum distance from the rim 20a/c to the wall 18 of the outer bucket. Specifically the minimum separation of the rim 20a/c and the wall 18 is about 2/3 a diameter of the peripheral curve, although any separation greater than 3/5ths a mean diameter of the peripheral curve may be adequate to ensure that a variation in a free surface over the rim is small enough to provide reliable spontaneous redistribution during withdrawal. To reduce a footprint of the substrate, the outer wall 18 can be provided with a shape to further reduce a free surface variation directly above the rim 20, at smaller minimum separations.

Each cup may have a respective plane Sᵣ, for example, if each cup is designed to have a same capacity C, however this is not required, in other embodiments of the invention, multiple metering chambers 12 may be provided, each with different profile, capacity, diameter, shape of opening, peripheral curve length or geometry. If each Sᵣ has a respective height, a lower height cups will be filled first, at least to the levels shown in FIG. 2iii, to ensure filling, and then the highest height cup is filled to overflowing (flooded state). If the samples in each cup are compatible, such as all aqueous solutions, placing the highest height cup in flooded state, and then withdrawing all liquids will successively meter each cup. However, if the liquids are mutually immiscible, or have sufficiently slow diffusion rates, for example, it is preferable that the differences in heights of the cups are sufficient for margins of filling, whereby once the highest height cup is flooded, and then withdrawn below the critical point, and is therefore metered, the second highest height cup can be overfilled with the second liquid to bring it to the flooded state. The second liquid's retraction results in both highest and second highest height cups being metered, as long as the flooded height of the second highest cup does not rise to the level of the rim of the highest cup. By iteration any number of different liquids can be metered. It may be preferred to substantially completely empty the first fluid from the outer bucket before recommencing filling of the second highest cup, to avoid mixing or stratification if there are different mass densities. It can be very useful to provide a few metered volumes in a common outer bucket, as many tests and experiments can be provided by mixing a few well-metered volumes. Such substrates can be used for other protocols too.

Furthermore, providing 3 separate openings to three separate, or one collective drain (with suitably controlled venting), can be beneficial if there is a desire to avoid any contact between the samples in the respective cups prior to some use. By inserting a conformal partitioning cage to isolate each of the three cups, the individual cups can be independently over-filled and metered in any order, with no risk of cross-contamination. Once each is metered, and the overflow emptied, the cage may be removed, and a cover provided. Then a solvent/sample may be flooded, or thermodynamic, acoustic, electric, or magnetic treatment may be provided, to promote treatment or mixing. The preset capacities of the respective metering chambers 12 may be crucial for low-cost sample testing.

FIG. 4 schematically illustrates a second variant having two embedded fluidic channels. Instead of outer bucket 22 communicating directly through the substrate 10 to port 25, the outer bucket 22 and port 25 are coupled via an overflow channel 26, which extends across the substrate 10. This arrangement permits all ports to be on a top side of the substrate. The substrate 10 further includes a metered liquid channel 28, which extends to a port 29. Any previous embodiment of the present invention may be provided with such a metered liquid channel, including multi-cup embodiments. Accuracy of metering is generally repeatable within the cup, but metering accuracy degrades with a distance travelled therefrom, so it can be desirable to limit interfaces and travel distance, particularly if a highest accuracy is desired. Surface affinities and residuals in corners and edges of channels may retain a difficult-to-quantify volume of the liquid. For volumes > 10 µL, the penalty to accuracy of small distance travels may be negligible. As shown, the cup has a highest curvature region in the low radius corners, but this is a higher radius bend than shown in FIG. 1 as the floor is arched. The closer the shape of the cupped surface 13 is to a hemisphere, the lower the maximum curvature. As shown, l_{d} ≈ 3 d_{cup}, and the outlet to the metered liquid channel 28 is slightly off-centre.

One advantage of the device of FIG. 4 is that the cup can be repeatedly used to meter a same volume of a same sample. In general, a first measurement volume will have a greater loss due to retention within the channel 28, but thereafter several to many metered volumes may be captured by the same chip, with high reliability. This is particularly relevant to centrifugal microfluidic chips: it is undesirable to add mass and occupy a footprint on the chip, for metering in centrifugal microfluidics. A direct coupling of port 29 to a microfluidic chip, or other device, that provides suction, can allow for low-loss, high-accuracy metering. Similarly, by pressurizing metering chamber 12, the metered volume can be delivered to a microfluidic chip that has no suction mechanism. It should be noted that the suction need not be exceedingly well controlled. A finger-actuated pump, such as that described in Applicant's co-pending WO 21/156844, even if it may not provide a uniform fluid transportation rate, can certainly provide enough low-pressure, to imbibe the metered volume. While injection into other devices is useful if a sample is repeatedly dispensed, for a number of purposes, a single-use metered supply can also be incorporated into a chip with embedded fluidics, to avoid manual operations.

FIG. 5 shows a variant with a first example of a device having a supply for filling the cup, using direct drip feeding. The metering chamber 12 and outer bucket 22 are like previous figures, but the peripheral curve has l_{d} ≈ 5 d_{cup}. The supply includes a cistern 39 (shown open and ready for sample loading, but it could be covered provided venting requirements are met). Cistern 39 feeds a supply chamber 42 that is sealed by a lid 38 having only the opening to the snorkel, and to a nozzle 40. The nozzle is shown centred above the cup. The supply chamber 42 is provided between the lid 38 and a partition 41 that bears the nozzle 40. The partition 41 provides a curved floor for guiding sample from the snorkel to the nozzle 40, and forms a ceiling of the outer bucket 22. Nozzle 40 is a constricted opening that cooperates with rheological properties of the sample 30 to ensure delivery of a stream of droplets of the sample 30. A delivery rate, or rate variability, has no effect on the operation of the invention once enough volume is deposited to flood the cup. The constriction may be chosen to ensure that pooled sample will not fall under gravity alone, which can be more useful in other designs e.g. for sensor-based feed control if time-response of stopping the drip is of greater concern than dead volume. The supply chamber 42 can be shrunk to a channel to reduce dead volume in other variants.

This embodiment is designed for simplified use, that relies on pre-metering of the sample. Pre-metering considerably simplifies equipment needed for operation, as sensors and control loops can be avoided. As long as a volume of loaded sample ensures flooding, and a volume in the outer bucket 22 is less than a single cap, the direct drip feeding ensures that the cup is filled before anything else, and all an operator needs do to perform the metering is to pre-meter (load a sufficient volume into the cistern 39), keep valve 45 closed, and turn on pump 36. Note that a whistle sound may be produced by turning on the pump 36 with the valve 45 open, to notify the user of the error. Pump 36 rarifies air in the outer bucket 22 (via channel 26, which is shown having an enlarged overflow chamber 44), and thus provides vaccum pressure throughout the metering chamber 12, outer bucket 22, metered channel 28, supply chamber 42 and snorkel. The vacuum draws the sample up through the snorkel and into the supply chamber 42, where it pools over the nozzle 40 while the sample wets the nozzle, and builds up a first droplet. The droplet, and a series of others, fall into the cup, and pool to form a free surface 32. As valve 45 closes the channel 28, and as the channel 28 meets the cup at a small area (hydraulic radius) opening, the liquid pools in the cup, fills, and then overfills the cup, as per FIG. 2.

Note that prior to the cap forming to the extent shown in step iv, the cap itself encounters the nozzle 40, and the ceiling (side of partition 41). Blocking the nozzle may not be desired as: it is likely to change the flow rate; it may support the cap in a way that involves wetting too much of the outer bucket and ceiling; and it may discourage collapse of the cap. However, interaction of the sample (cap) with the ceiling (chamber-facing side of 41) away from the nozzle may be used to encourage a displacement of the free surface away from the nozzle 40, and/or to encourage the spontaneous redistribution once enough liquid has been fed into the cup, to flood the chamber 12. This interaction may ensure sufficient volume is imbibed before first collapse, as the support offered the sample by the ceiling can extend volume of the cap before the first collapse.

As noted above, the nozzle can be provided off-centre of the cup to: reduce the chances of the cup covering the nozzle; increase a regularity with which the first collapse occurs; and provide guiding structures on the ceiling, near a peak of the cap (aligned with cup centre), for drawing the cap away from the nozzle. The more sample amassed before the overflow channel 26 gets plugged (as a consequence of the first collapse), the lower the chances of a droplet falling after metering, as long as the wetting of the ceiling does not require a cutting of the cap or adherence does not impede collapse.

After the first collapse of the cap, liquid pooling in the outer bucket 22 will cover Sᵣ, and *a fortiori* the overflow channel 26. In the fully generic situation, once the sample plugs channel 26, a race condition is set: the race being between completion of the droplet feeding, and the critical point. If the droplet feed completes before the critical point, the metering process succeeds. If a last droplet falls onto the free surface of metered volume 35, the droplet will be in excess of metering. The risk of a late droplet can be mitigated by: increasing a feed rate of the droplets; requiring a more accurate pre-metering of the sample volume; or decreasing a withdrawal rate, each of which can have some part in the solution, however the most general solution with the fewest downsides is increasing a volume of the cap, and decreasing a capacity of the outer bucket 22, so that, in the flooded state, the free surface is further above Sᵣ, as this, along with the withdrawal rate, determines a time from the cap collapsing (iv-v) and the film peeling (v-vi).

From a user's perspective, there may be no perceptible difference between when feeding begins and ends, and when withdrawal of the overflow from outer bucket 22 begins. In the illustrated embodiment, an excess chamber 44 is provided that allows for enough of the overflow volume to be retained within the substrate 10 to bring the overflow fluid level 33 to a safe measure below the rim 20 and therefore Sᵣ. Excess chamber 44 extends partially azimuthally surrounding the outer bucket 22 to offer a larger capacity than might be imagined looking at FIG. 5, and may contain a cotton ball or wicking material to draw the liquid away from port 25, permitting the pump 36 to only receive air. This is particularly desirable if a single use chip is desired, and all liquid is to remain on the substrate 10, but a liquid or air pump 36 may be preferred if the substrate 10 is to be reused for an unknown number of iterations to dispense a same or compatible sample (i.e. without cleaning). Of course a resealable trap can be used to remove excess sample.

Once the free surface approaches Sᵣ, and the final layer of covering sample is peeled off, the metering chamber 12 is metered and further withdrawal of the sample is only needed to avoid risk of splash or spill that could alter the amount of sample in the cup. Nonetheless, in accordance with the simplified procedure, the pump 36 is operated until the sample is substantially removed from the outer bucket, and the pump 36 encounters the relatively negligeable resistance of pulling air through the cistern 39, snorkel, nozzle, outer bucket, and channel 26. If suitably provisioned, at this juncture the pump 36 may automatically stops, with the sample substantially relegated to the cup, where it is metered. In other embodiments, the pump may draw sufficient air to make a whistling noise that indicates the metering is complete to a user, for example with a whistle that is only pronounced when the snorkel is dry and the pump 36 has low resistance. In further embodiments, the lid 38 and partition 41 may be transparent and a visible cue provided by the rim 20 may be far more pronounced once the critical point is reached. The visible cue may be substantially enhanced with lighting from below the substrate (if transparent or translucent), and the visual cue may be enhanced and read digitally by a low-cost small pixel array camera to automate shutoff.

The metered volume is thereafter extracted via channel 28. A valve 45 located at metered port 29 is schematically illustrated, and is notionally opened. In some embodiments, opening of the valve may involve pressing a centrifugal microfluidic chip (or other device requiring metered sample 35) into contact with metered port 29, and the pressing itself both establishes a connection between an inlet channel of the chip or device and the port 29, while opening valve 45. A mechanism for actively priming channel 28, and drawing the metered sample 35 is called for in this embodiment. The mechanism can be supplied by the same pump 36 via another port of the pump, or by disconnecting the pump from the substrate 10 and reconnecting it to a port of the chip.

FIGs. 6A,B are schematic illustrations of a chip designed for tide-pool flooding, as is an alternative mechanism for achieving the flooded state. This method is particularly useful to 1- simultaneously bring a number of metering chambers 12 into the flooded state (i.e. avoiding having to align droplets for delivery into each cup); 2-fill very small volume cups, which would otherwise require very accurate alignment and very small droplets; and 3- can be used where a time to metering is of concern. FIG. 6A is a top plan view of a patterned substrate 10 (cover removed) and is FIG. 6B a cross-sectional side view.

FIG. 6A shows an array of 33 metering chambers 12 (only 4 of which labelled to avoid busying the drawing), each of which having a same profile, depth and volumetric capacity defined by similar cupped surfaces 13 (only one labelled). Nonetheless a different number of cups, and cups having different shape, capacity, or arrangements are taught as they are expected to suit other protocols. Each cupped surface 13 meets a common (primarily) plane surface at a respective peripheral curve 15 (only one labelled). The plane is a surface of a slab 16 (see FIG. 6B) that provides walled separations of the cups. The slab 16 can be considered to be a plurality of walls surrounding each cup, where the walls meet seamlessly, and the rims 20 are unindividuated parts of this surface. A tide-pool process employs four bidirectional (i.e. half-duplex) channels 26 (only one labelled in each view) for filling and overflow withdrawal.

In some embodiments, each of the 33 cups may be respectively functionalized with a respective target, bound to the substrate. By metering a common volume in each cup, a controlled volume of the sample is exposed to each functionalized surface, and a process of filling the cup, incubating or treating the sample, and subsequent washes, buffers, lysis buffers, developers, etc. may be invoked to perform a desired array of assay tests. After the first metering of sample, a volume of the sample may be outgassed, evaporated, or frozen to change volume in a predictable manner that allows for a controlled volume of a second liquid to top up each cup in a substantially reliable manner. All cups can be exposed to a medium by flooding the chip for a duration to permit diffusion, or mixing induced by other disturbances such as pressure, liquid flow, microwave, heat or convective currents.

FIG. 6B shows a cross-sectional side view along BB of the substrate 10, in concert with a sealing lid 38 enclosing a cavity that is vented by the cover's vent 46. As seen in FIG. 6A, this section line happens to dissect 4 cups (one of which nearly tangentially), as well as one opening to overflow channel 26 (used both for feeding and overflow withdrawal. The slab 16 is shown as a raised relief section, relative to a trough that surrounds the slab 16. The trough is a common outer bucket 22 for all of the cups, and communicates with all four ports 25. As such, the wall 18 surrounds the relief pattern defining the outer bucket 22, however the trough has been found to be unnecessary and may actually impair complete withdrawal of overflow, and can be provided by a bottom depth of overflow channel 26 that is greater than the rims/plane.

The four channels 26 are provided from respective ports 25 (any one of which may (half-duplexedly) serve as a supply conduit and overflow channel) and vent 46 is provided in the cover. There are a variety of ways in which these overflow channels 26 can be used. Flooding has been successfully accomplished by a continuously expanding a front of the liquid that traverses the slab incrementally. A single front avoids risks of sandwiching air bubbles between multiple fronts. To flood, the sample can be introduced from one of the overflow channels 26 that serves as supply, with an opposite port (or all other ports 25) providing suction to pull the sample liquid into a cavity defined by overhead space above the slab, the troughs, and cups. The cavity encompasses a volume enclosed by wall 18 and a ceiling provided by the cover. The liquid will bead at the supply conduit but is compelled to spread outwardly, preferentially filling the trough or generally by the corner provided between the wall 18 and floor where no trough is provided. The vent 46 is closed during flooding. Assuming an aqueous or oil-based sample, the bead spreads out, pulled by the attraction to the higher surface areas of the troughs/corners and cups, driven by the pressure difference.

By providing the cups with substantially circular peripheral curves, filling is facilitated because no matter what minimal curve a leading edge of the sample forms, and what vector it moves under, a same shape of the cup is locally encountered, and air entrapment and bridging of the liquid to enclose air bubbles, is strongly discouraged. Cups having a shape generally resembling a hemisphere have been found to admit of bubble-free filling during flooding, down to very small (submicroliter) volumes. The objecttive of flooding is to provide a liquid phase that completely covers the slab, minimally touches walls 18 and the ceiling, and fully covers all channels 18. Favourable filling is ensured by raising the ceiling in proportion to the bead thickness of the sample, and the arrangement of surrounding walls that draw the liquid around the perimeter of the slab (trough in this case) first. A surface affinity of the cover for the sample may be less than that of the substrate, and the sample is preferably supplied to bottom-up flood the slab.

After flooding, the overflow volume is removed in a recess process. Recessing is a slow and controlled removal of the overflow volume, and can be provided by a low pressure pull on any or all of the ports 25. If only one port is used to draw the liquid, it has been found that the liquid will tend to evacuate from the slab first and around the trough last. Once the liquid is relegated to the trough, the sample will be metered in the cups. To maximize removal of the sample liquid, the port used for overflow is preferably near the trough, and most preferably, at the corner between wall 18 and slab or floor of the cavity. The recess process may be symmetric, in that the liquid exits from the port it entered for flooding, or can be non-symmetric. For example the sample can flood from one side and receded to the other. Having more (e.g. 6 or 8 openings: one in the middle of each short edge; and two or three in the trough on each long edge), allows for more equal spacing along the periphery, and also provides faster receding, however abrupt changes in pressure when different ports are no longer blocked with liquid plugs may be undesirable. Having ports in each of the 4 corners can be beneficial for minimizing dead volume of sample left in the cavity after recess loading (i.e. in corners where liquid may tend to get trapped as shown particularly in the expanded view of FIG. 6B after recess). Eliminating this volume may be desirable for ensuring exact volume of the sample in the cavity, after recess.

It is generally preferable to flood from a single source, that is preferably positioned near the trough or corner where walls 18 meet a floor of the cavity (away from a ceiling). A pool of the sample with a single free surface that extends over the whole slab 16 is desired. While more complicated the race conditions arise if multiple openings are used for flooding and trapping air bubbles is a risk where local fronts combine, many branched division (a delta structure) can be an effective strategy to supply liquid into the cavity via one path that divides into many openings to the cavity, to provide a flatter liquid front throughout the filling, and relying less on the guidance from the corners. Though not suited for half-duplex operation (for both flood and recess), as some of the many parallel branches tend to empty before others, stranding some liquid, the branched supply can be used with separate, individually pumped overflow channels.

Applicant has found that even very small volumes can be reliably filled and metered if the cupped surface 13 is sufficiently close to a hemisphere, almost regardless of the curvature of the advancing liquid front. For example, if the largest half-ellipsoid (of eccentricity < 0.95) contained within the metering chamber 12 occupies least 80% of the measured volume (from Sᵣ), the cup with an expected surface affinity will typically prefer complete filling. Hereinbelow FIGs. 7A-E show various revolute profiles (or truncated revolute profiles) that may be chosen for cupped surfaces 13.

FIG. 6B has 3 areas that are expanded for greater clarity, and to illustrate the flooded chip (substrate 10 sealed with cover 38). Respectively the 3 areas cover (from left to right) a peripheral cup and one port to a first overflow channel 26 (perhaps source), a central cup, and a peripheral cup and opening to a second channel 26 (distal to the first overflow channel, and so logically used for suction during flooding). The enlargement at the right is duplicated to show the difference between flooded and recessed fill states, and also shows port 25 that is fully lower than the rims/plane of the slab. Preferably at least a middle line of the port is below the rims of the cups, unless there are many ports to enable evacuation regardless of any small angle of the plane with respect to gravity.

In the flooded state, the sample 30 fills the cups and covers the slab 16 with a free surface 32 overlying the slab 16. Unlike FIG. 2 step v, the free surface 32 is not symmetrically arranged overtop the rim 20 of all cups of the chip. While the center cup is shown with a free surface that is substantially parallel to the plane Sᵣ defined by the rim 20, the further from the centre of the chip the cup, the greater the variation of distance to the free surface over peripheral curve 15. Each curve 15 has a point closest a centre of the chip, and a distal point opposite the centre. A distance from the closest point to the free surface is smaller than the distance from the distal point to the free surface. This difference is of importance for designing the chip. As shown in the rectangular expanded view of the expanded view of the peripheral cup, across the section line BB (which nearly aligns with a closest to distal direction of the chip), the distance δ represents the difference between distance to the free surface at approximately the closest point compared with that of the distal point. As Sᵣ happens to define a plane, all local normals are commonly oriented. Distances between Sᵣ to free surface 32 vary by δ along the imaged cross-section. It will be noted that δ as shown is less than 40% of d_{cup}, and about 60% of a mean distance between the Sᵣ and bottom depth of cup. A mean distance (d_{avg}) between Sᵣ and the free surface over the cup is about 4/3^{rd} d_{cup}, and accordingly d_{cup} + d_{avg} = 2 1/3 d_{cup}. As δ < 0.4 d_{cup}, δ is about 17% of d_{cup} + d_{avg}. Applicant considers a variation δ of upto 50% of the sum of d_{cup} and d_{avg} to ensure most samples will be metered by spontaneous redistribution, although limits of 33%, and 25%, are preferred.

Herein it is useful to compare the differences in distance to free surface from points on Sᵣ to the sum of d_{cup} and d_{avg} because the deeper the cup, the more resistant the volume is to evacuation instead of spontaneous redistribution. Shallower cups require a stricter conformation of the plane (or other Sᵣ) with the free surface. A chip is not filled to a same extent in each metering process, and there may not be a benchmark identified for when the chip is flooded. When the average separation approaches 0 during recess, the capacity of the cup and variation δ will lead to spontaneous redistribution, or not.

It will be noted that a volume metered by the cups is a small fraction of the volume of the overflow region, in part because of the volume of the channels 26 and to a large extent because of the need for covering the slab 16. Viscosity and surface tension of the sample can affect the minimum thickness (average separation) with which the slab 16 can be covered completely and reliably, and in some embodiments, it is preferable to reduce viscosity and surface tension with known additives, to minimize time and maximize reliability of flooding with less overflow volume.

The second expanded view of the opening shows overflow, and metered sample 35, at a time point just after free surface recedes below the slab 16. It will be noted that sample 30 left in corners may have surface adhesion that precludes complete removal, and beads may be retained in corners of this device after withdrawal. If a maximum volume of the sample is to be recuperated after the metering, suction can be applied until each of the 4 openings has no liquid plug blocking the opening.

It should be noted that by dividing a small volume into well-metered tiny volumes having substantial exposed surface area, evaporation may be facilitated for crystallization experiments, and relatively fast diffusion can be ensured, such that metered volumes can be chemically admixed with a subsequently flooded reagent.

FIGs. 7A-E schematically illustrate five examples of suitable profiles for cupped surfaces 13 that allow for tide-pool filling. The requirement for tide-pool filling is that the liquid enter from a top edge, typically from an advancing front of the liquid sample, and wetting proceeds to fill the cup before the advancing front covers the periphery, and encloses an air bubble at the bottom of the cup. The easiest way to avoid entrapment is to ensure that the distance half-way around the periphery is longer than the distance to the bottom, such that the race between these parts of the advancing front are preloaded. This assumes a same surface affinity of the liquid for the surface of the rim 15 as for the cupped surface 13. If the cupped surface 13 is functionalized and/or activated, this may not be the case. Furthermore, if the slab 16, away from the cupped surface, is surface modified to retard the advancing front, substantially greater depths can be filled. A hemi-spherical cup, like the one shown in FIG. 6B, provides half the distance around a half periphery to the bottom, and is typically more than necessary to avoid air entrapment.

FIGs. 7A,C,E show two sides of the profile of a cup, whereas FIGs. 7B,D show only one side. Nonetheless each profile may be either a revolute surface defining the cupped surface 13 (about an axis defined by dot dash line), or a slightly modified revolute profile may be desired when a density of the metering chambers 12 increases.

FIG. 7A shows a two-part profile in which the cupped surface 13a,b consists of a cylindrical side wall 13a and a bottom 13b having the shape of a spheric-section. The bottom 13b has a same curvature at every point, but the highest curvature is at an edge between sections 13a,b. The illustrated form might work well if the substrate is relief patterned by molding, as defects in the replication may smooth out this edge.

FIG. 7B shows a two-part profile in which the cylindrical wall is replaced by a frustoconical section 13a. While cylindrical sections offer higher volume per cup, they tend to be more difficult to form, and may be more difficult to fill without entrapping air, especially if the diameter of the peripheral curve is low relative to depth of cup. Frustoconical section 13a has about 1/3 the volume of the cylindrical side wall section, and has a smaller curvature at the edge between the two sections. Naturally the edge between sections can be avoided by rounding, or interposing a curved section between the two.

FIG. 7C schematically illustrates at 4-part profile. FIG. 7C shows a profile having a flared section 13a, which is meets frustoconic 13c via a rounding 13d. It should be noted that the peripheral curve is defined by a substantially minimum meniscal elevation, and the line d_{d} is the projection of this curve reporting its diameter. The bottom 13b has a sufficiently high curvature that sections 13b,c transition in a is fully smooth manner, defining no edge. As such the points of highest curvature are on the bottom 13b. Were it not for the rounding 13d, the frustoconic 13c would meet the flared section 13a (which is also frustoconical, but having an angle of about 30° from vertical as opposed to about 12° from vertical) at an internal reflex angle of about 198°.

As is well known in the art of planar tilings, circular peripheral rings can be packed with a highest density in a hexagonal packing, however, some flattening of the circumference to provide walls separating an adjacent cup, increases a density of cups, while keeping them a spaced apart. With a different degree of deformation of a notional circular peripheral curve, the arrangement of cups may approach square or triangular packings, as well as hexagonal. The flattening of the peripheral curve in top plan requires modifying the revolute profile locally. A flanged profile such as FIG. 7C can facilitate the modification (although FIG. 7B is also a good candidate). Flared section 13a can be tilted relative to frustoconic 13c at some revolution angles. For example, the angle between the flared section 13a and frustoconic 13c may vary smoothly as a function of revolution angle to accommodate proximity of neighbouring cups: at revolution angles aligned with nearest neighbors, the angle between sections can be reduced, for example to straighten the reflex angle to 180°, and midway between two such revolute angles, the angle in the profile may be as shown. This will decrease radius in the direction of the adjacent cup by about 20%, which affords a considerable increase in density. It also decreases how much of the capacity of the cup that lies within a largest included hemi-ellipsoid of ε < 0.95.

FIG. 7D shows a three-part profile comprising cylindrical 13a, frustoconic 13c, and spheric-sectioned bottom 13b. While abrupt transitions are shown, it is expected that rounded transitions would be effectively provided by method of forming. FIG. 7E shows a similar embodiment where the conic 13c and bottom 13b sections are rounded to more closely approximate a hemisphere. Each of FIGs. 7B-E as illustrated have at least 80% of the volumetric capacity within a largest included hemi-ellipsoid of ε < 0.95.

FIG. 8A is a perspective view of a chip similar to FIG. 4, but having a lower aspect ratio. Like references label like features and their descriptions are not repeated. As shown, l_{d} is ~6 d_{cup}. The chip of FIG. 4 is composed of a relief-patterned substrate 10a having structures defined on both top and bottom surfaces. The patterning includes four throughholes: two for each of channels 26 and 28. Specifically, overflow channel 26 has one throughhole defining a conduit for port 25 (outside the outer wall 18), and one extending through a floor of the outer bucket 22. Similarly metered channel 28 has one throughhole defining a conduit of port 29, and one extending through a floor of the cup 12. Relief structures on a bottom side of the substrate 10a provides most of the channels 26, 28, interconnecting these throughholes. Bottom cover 10b is an unpatterned sheet, which is preferred for obviating alignment or registration in assembly with substrate 10a. It may be composed of a same polymer as the substrate 10a, or of a compatible polymer, in which case bonding may be provided with local melting, or softening, as known in the art. The sheet may be composed of, or comprise, a thermoplastic elastomer or solid adhesive. Applicant has found that many TPE films make fluid tight bonds with an array of thermoplastics, with low pressure and temperature bonding regimes. Some TPEs are oil-free, medical grade and easily processed and bonded. Applicant notes that substrate 10a is readily formed by injection molding, and seal-ready cover 10b offers efficient assembly to form an enclosed fluidic system at a low cost, with high reliability.

FIG. 8B is a panel showing a metering process on the chip of FIG. 8A. To illustrate the process a cross-sectional image is taken along the major axis of the chip. As the structure is so similar to that of FIG. 4, it's description is not repeated here. Like FIG. 4, to meter sample 30, a pump 36 and valve 45 are mounted respectively to ports 25 and 29. The pump 36 is actuated any time before, or at, step ii, and the valve is closed from step i until around step iv. The process of FIG. 8B steps i-iv may be indistinguishable from steps i-vi of FIG. 2, although different time points are shown. At some point between step iv and v, the valve 45 is opened, and metered sample 35 is imbibed into a vessel (not shown), such as a microfluidic chip, measuring or treating system, or injector. At step v some of the metered volume 35 has been delivered to the vessel.

FIG. 9 is a schematic, cross-sectional view of a variant of the embodiment of FIG. 8 that allows for a lower volume of overflow, and can be used to meter. As explained hereinabove, if a naturally formed liquid cap has a volume that leaves a cavity in a flooded state, a first time the liquid cap breaks, a host of reasonably low cost, reliable, monitoring and filling schemes can be employed that allow for automated or user-initiated feed control. Once the cap begins to be formed, or has a given height or volume, supply of the sample may be slowed, and once the cap dynamically redistributes its volume, a signal may be formed to stop the supply. The supply may be instantly and accurately be stopped, in some embodiments, however a lower cost system that gradually reduces the supply may be used, as long as the supply stops before the critical point in the withdrawal process. To ensure a flooded state, a volume in the outer bucket 22 can be reduced, while still providing an elevated platform for the rim 20 relative to the overflow channel 26.

A floor 22a of the outer bucket 22 is shown in the cross-section illustrated, to have a variable depth. Near opening to channel 26, the floor 22a is deepest, and radially opposed to the opening, the outer bucket has a shallowest depth. A volume of the outer bucket can be ¼ of the volume of the outer bucket 22 of FIG. 8.

FIG. 10 is a schematic perspective view of a cross-sectioned device formed of a substrate 10a, partition 41, and bottom cover 10b. The partition 41 has a conic funnel 47 surrounding a nozzle 40, that is fed by a snorkel (only an outlet 48 of which is in view). A practical microfluidic device of this kind will transfer the liquid from a reservoir (e.g. loading sample chamber or reaction chamber) where a (typically biofludic) sample was processed, treated, analyzed or supplied. Except possibly during sample introduction, liquid transfer is typically done in a sealed environment, which would call for a top cover or lid 38 not shown. Operation of this chip is similar to that of FIG. 5, except that a positive pressure is applied from the reservoir to draw the fluid up the snorkel to the top surface of the partition 41. Furthermore a floor of the metering chamber 12 is conic (angle shown -84°, but could be slightly larger or much less, such as 20°-88°, or 45°-85°).

FIG. 11 is a photograph of a fabricated device having 8 metering chambers 12. FIG. 12A is an enlarged, cross-sectional, CAD view. Each metering chamber 12 has a respective metered channel 28, and a respective outer bucket 22 with its respective overflow channel 26 (not in view in FIG. 12A, but shown in FIG. 11). Each metering channel's cupped surface 13 is similar (essentially conic), leading to the opening to it's centred metered channel 28 to define a funnel structure. Each outer bucket is shown very large compared with a volumetric capacity of the metering chamber 12. Applicant has found that draft angles of 35-70° with constant height of 0.5 mm, and base diameter of 2.75 mm give predictable volumes of between 1.5 and 4.5 µL for devices fabricated by 3D printing. Applicant finds an aspect ratios of 1:1.6 to 1:3, or about 1:2 work well.

FIG. 12B is a frame from a video showing the metering process using this device. A blue tinted water was used to facilitate viewing of the sample. The sample is still being withdrawn from the first metering chamber's outer bucket at the frame. Each metering chamber is illustrated as having been metered by flood and recess processes. Applicant has found that hemispherical, and like-shaped cupped surfaces avoid air bubbles in the metering chamber 12 when the liquid is supplied from the rim. Another option is to provide a relatively shallow metering chamber as shown.

Repeatability of metering volume was assayed by iterative filling and metering. The process involved injecting sample into the metering chamber 20 until it over-flowed and covered the outer bucket, with a free surface overlying the metering chamber. Then the overflow channel 26 was coupled to a vacuum pressure, to draw the sample out of the outer bucket. As shown in FIG. 12B, the removal was substantially complete. This left the metered volume in each metering cup.

Five different metering processes were performed, and the metering was nearly perfect for the resolution of the scale used. The capacity of the metering chamber was about 40 µL. Mass densities of water (0.1 g / 100 µL +/- 0.001 g/µL), phosphate-buffered saline (PBS) (0.099 +/- 0.002), and PBST (0.100 +/- 0.000) were measured. PBS, PBST and water have substantially different pHs, and viscosities. Detergent in PBST changes surface tension dramatically. Metering by this process, using this device proved to have excellent repeatability. A same well was used for each of 32 measurements unlike FIG. 12B, which shows all wells metered. The 32 measurements were performed in 4 batches, each using a different tap water sample. Tap water has some variability in composition, but PBS and PBST are not expected to have any. Each batch had a similar mean volume (specifically 39.8 +/- 1.0, 39.63 +/- 0.7, 39.25 +/- 0.7, and 39 +/- 0.5 all µL). All measurements agree within error bounds and the standard deviations are between 1.2-2.5%. Each batch has a lower standard deviation than the previous. On average the standard deviation was 0.75 µL or 1.9%.

The data further allows us to examine how measurement sequence across the 4 batches affected measurement. The first measurement of each batch had a higher mean volume (40 µL), the second typically a lower mean (38.75 µL), and the remainder were closer to average. The 32 volumes averaged to 39.4 µL, with a standard deviation of 0.8 µL or 2%. Excluding the first measures reduces the standard deviation to 1.8%.

Similar repeatability was observed for 8 measurements each on both PBS and PBST. Averages of the 8 measurements for PBS and of PBST, were 39.27 +/-0.36 µL, and 39.75 +/- 1.8 µL.

Another campaign was performed with a chip of the same general form, but with a far smaller volume. The target volume for these 8 metering chambers was about 9 µL. Three tests were performed, same as above, with 3 tap water samples. The chosen metering chamber was found to have mean volumes of 8.5 +/- 0.3, 8.6 +/-0.2, 8.6 +/- 0.2 µL, for the 3 tap water samples. The average standard deviation across the 3 samples was 0.23 µL. Averaging all 24 experiments gives an average of 8.58 +/- 0.24 µL or 2.8%. PBS and PBST were also measured, assuming each chamber identical. The volumes obtained were 8.8 +/- 0.24 µL and 8.8 +/- 0.16 µL, respectively.

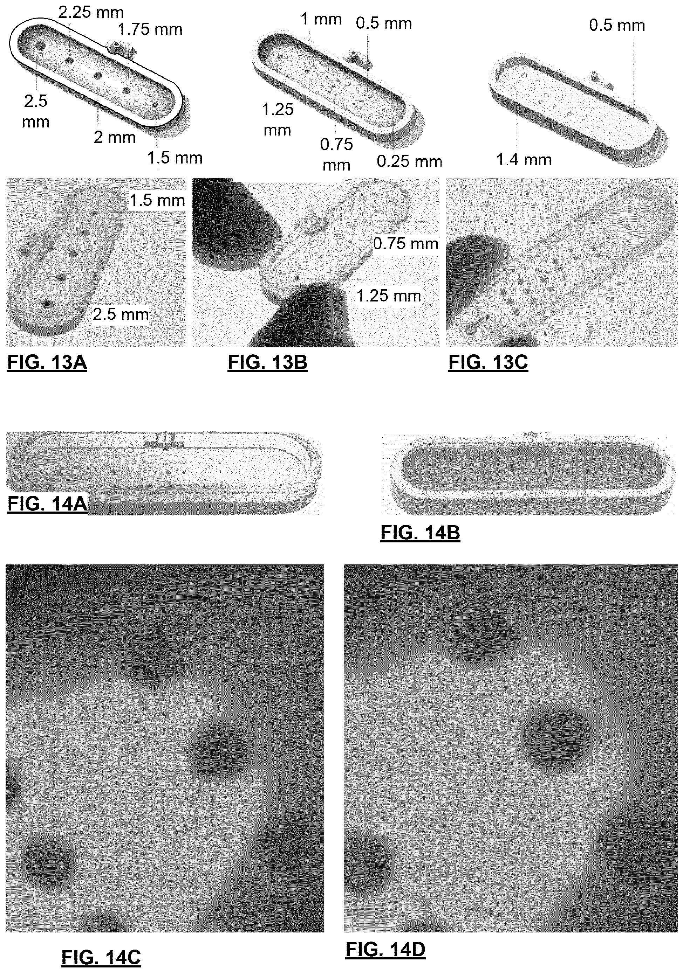

FIGs. 13A-C are panels showing CAD design and images of metered chambers, for smallest volume metering. These devices are also 3D printed. Each device is a tray having a common outer bucket 22, and a half-duplex flood and overflow recess channel for metering by the tide-pool process. Each tray has a variety of diameter hemi-spherical cupped surfaces 13. For example, FIG. 13A has 5 metering chambers, with 1.5, 1.75, 2, 2.25, and 2.5 mm diameter hemispheres. FIG. 13B has one largest volume metering chamber of 1.25 mm diameter, one of 1 mm diameter, 3 of 0.75 mm diameter, 3 of 0.5 mm diameter, and 3 of 0.25 mm diameter. While FIGs. 13A,B have each diameter 0.25 mm smaller than an adjacent, FIG. 13C has 9 rows of 3 (each) metering chambers varying by 0.1 mm between 1.4 mm, and 0.6 mm. FIG. 14A,B are respectively frames of a video of the embodiment of FIG. 13B in a final, metered state, and in a flooded state. FIGs. 14C,D,E are close up images of parts of respective frames of the video during the withdrawal showing the moments after, during and before surface tension dynamically redistributes the liquid.

Applicant has performed measurements on the repeatability of metering on a middle sized of these hemispherical cups: the 1.4 mm diameter, or 0.72 µL cup shown in FIG. 13C. This was close enough to the limits of sensitivity of the available scale, to make smaller metering difficult to ascertain. Eight measurements were performed, each on a same metering chamber, even though all metering chambers were metered together, only the one chamber's sample was extracted and weighed. Average volumes for water, PBS and PBST were: 0.69 +/- 0.14, 0.74 +/- 0.11, and 0.64 +/- 0.11 µL, respectively.

The essential features of the described herein are shown with a minimum of view-obstructing alternative elements, and attendant paraphernalia. A number of sensors, and devices can be added to the substrate or device to improve process controls and reliability. Furthermore, temperature controllers can be used to incubate or control temperature of the metered samples, or of other connected microfluidic chambers. A tray of suitably spaced microspots of liquid can be used to expose the metered volumes to dried or liquid samples or reagents, and diffusion can be used to permit a reaction that can then be assayed, for example by optical or electromagnetic interrogation, or binding to a surface of, or beads within, the chamber. Variations of the foregoing embodiments will be evident to a person of ordinary skill and are intended by the inventor to be encompassed by the following claims.

## Claims

1. A solid substrate defining at least one metering device, the substrate comprising:
a metering chamber comprising a cupped surface bounded by a closed interior peripheral curve of length l_{d}, having a depth d_{cup}, that is between 0.05 and 2 times l_{d};
a rim surrounding the metering chamber's peripheral curve locally defining a smooth surface Sᵣ that includes the peripheral curve and covers the metering chamber to enclose a volume V of the metering chamber that is between 0.05 and 500 µL;
a retaining structure for supporting a liquid overflow volume with a free surface above each respective Sᵣ, the overflow volume being greater than 1/5^{th} V; and
an actuable drain for withdrawing the overflow volume from the retaining structure, the drain provided by an opening to the retaining structure located below the rim;
where:
the chamber has: no opening in the cupped surface; or only one opening through the cupped surface to a second chamber, the opening provided distally of Sᵣ, and having a hydraulic radius less than 1/5th that of the peripheral curve; and
at least one of the following:
i) the retaining structure supports a volume of overflow for which no point on Sᵣ has a distance to the free surface denoted dₛ that differs from d_{avg} by more than ½ (d_{avg} + d_{cup}), where d_{avg} is an average distance from all points on Sᵣ to the free surface;
ii) the retaining structure is arranged so that overfilling the cup such that the cup is full and liquid pools around the rim to cover the drain, permits the drain to withdraw the pooling liquid below a level of the rim producing a spontaneous redistribution of the liquid under surface tension to meter the liquid in the cup.

2. The substrate of claim 1 wherein Sᵣ is a minimal surface having no curvature greater than 80% of a maximum curvature of the cupped surface measured away from the peripheral curve, and away from the opening if extant, and a maximum curvature of the cupped surface away from the peripheral curve is 4 / d_{cup}.

3. The substrate of claim 2 wherein Sᵣ, within the rim and over the cupped surface, is bounded between two planes separated by a distance of less than ¼ d_{cup}.

4. The substrate of claim 3 wherein a maximum curvature of Sᵣ between the two planes is less than half a maximum curvature of the cupped surface away from the peripheral curve and any opening provided distally of Sᵣ.

5. The substrate according to any one of claims 1 to 4 wherein the cupped surface:
has a continuously reduced cross-sectional surface area as a function of distance from Sᵣ:
away from the peripheral curve and any opening, is a smooth, simply concave, surface, with a rate of change of curvature of less than 50% along any arc from a bottom to the peripheral curve; or
is a revolute surface having an axis of revolution locally perpendicular to Sᵣ.

6. The substrate according to any one of claims 1 to 5 wherein the retaining structure comprises one or more walls providing a retention level higher than Sᵣ by at least 1/3 d_{cup}.

7. The substrate according to any one of claims 1 to 6 wherein the cupped surface includes the only one opening, which is coupled to a port, or microfluidic chamber, for receiving the metered sample, and V is greater than 6 µL.

8. The substrate according to any one of claims 1 to 7 wherein the metering chamber is one of a plurality of metering chambers of the substrate, each metering chamber having a same or different volumetric capacity, or different groupings of same volumetric capacities; having a designated or shared overflow volume, and having a designated or shared actuable drain.

9. The substrate according to any one of claims 1 to 8 further comprising a fluid supply for delivering a sample liquid into the metering chamber, either by filling the metering chamber before filling the overflow volume, or by filling part of the overflow volume before filling the metering chamber.

10. The substrate according to any one of claims 1 to 9 provided as a kit, the kit further comprising at least one of:
a cover adapted to be sealingly bonded to part of the retaining structure to enclose the overflow volume and cupped surface;
a cover adapted to be sealing bonded to the substrate to enclose a microfluidic channel for: supplying sample to the metering chamber; retracting overflow from the overflow volume; or delivering a metered volume from the metering chamber;
an operable valve for a port of the substrate;
a pump for applying a pressure of 0.7 KPa to 7 KPa to a port of the substrate, or a cover;
a sensor and controller for controlling a pump or valve in response to detected spontaneous redistribution of liquid around the rim during withdrawal of overflow from the overflow volume.

11. The kit according to claim 10 assembled to produce a device for metering a liquid.

12. A method for metering a liquid volume of a sample, the method comprising:
supplying a volume of the sample in excess of a desired volume, to a metering cup;
allowing the cup to be overfilled, and to flow into an overflow collection chamber that surrounds an opening of the cup until the level of sample in the overflow collection chamber covers the cup, the cup having a smooth rim surrounding a peripheral curve at an edge of the cup, such that the sample above the rim and cup has a free surface; and
removing sample from the overflow collection chamber until the sample spontaneously redistributes to leave a metered volume in the metering cup.

13. The method of claim 12 wherein removing the sample comprises applying a lower than ambient pressure on a retraction channel coupled to the overflow collection chamber below the rim.

14. The method of claim 12 or 13 further comprising applying a pressure difference between the metering cup and a withdrawal channel coupled to the cup, to displace the metered volume in the cup to a chamber.

15. The method of any one of claims 12 to 14 wherein supplying the volume comprises applying a pressure difference between the overflow volume and a supply to move the liquid volume into position flooding the cup and partially filling the overflow collection chamber, where the supply fills the cup first and the over flow collection chamber second, or the cup partially fills the overflow collection chamber prior to filling the cup.
